# EUROPEAN PATENT SPECIFICATION

(11) **EP 3 315 432 B1**
(45) Date of publication and mention of the grant of the patent: **19.09.2018**
(21) Application number: 17155291.2
(22) Date of filing: 08.02.2017
(51) Int. Cl.: B65G 1/02, E01F 15/14, A47B 95/04

(54) **RACK POST PROTECTION APPARATUS**
REGALPFOSTENSCHUTZVORRICHTUNG
APPAREIL DE PROTECTION DE MONTANT DE RACK

(30) Priority: 31.10.2016 US 201615338677
(43) Date of publication of application: 02.05.2018
(73) Proprietor: Kim, Jin Ok, Seoul 05649 (KR)
(72) Inventor: Kim, Jin Ok, Seoul 05649 (KR)
(74) Representative: Loo, Chi Ching

(56) References cited:
- EP-A1- 3 003 783
- WO-A1-2005/049453
- WO-A2-2009/007467
- DE-A1-102010 052 108
- KR-B1- 101 296 162

## Description

### TECHNICAL FIELD

The present invention relates to a rack post protection apparatus, and in particular to a rack post protection apparatus wherein an attachment and detachment are easy, and an installation work may be simplified, and the front side and both lateral sides of a rack post which are exposed to the outside can be protected.

### BACKGROUND ART

A rack structure (hereinafter referred to "a rack"), in general, is used to effectively display or sell products packed in a box or a pallet or store various goods at a warehouse, a storage type shop, etc.

The rack is formed of a plurality of posts which are installed vertical and spaced apart at set intervals, a plurality of load beams which are installed traversing between the posts in horizontal directions, and a plurality of tie beams which are installed in the direction traversing between the rod beams.

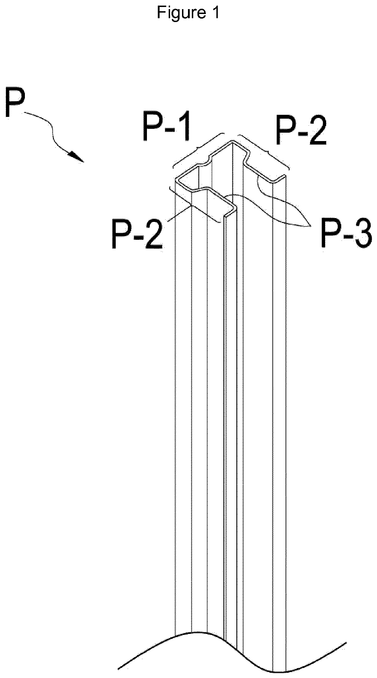

The shape and structure of the rack post is schematically illustrated in Figure 1. The typical rack post (P) is configured in such a way that a front side part (P-1) protrudes forward, and a groove (P-3) is formed at both lateral surfaces (P-2) while opposing to each other. Moreover, three lateral surfaces formed of the front surface (P-1) and both lateral surfaces (P-2) are exposed to the outside.

The three lateral surfaces of the post (P) exposed to the outsides may collide with goods when the goods are loaded or unloaded, thus causing damages to the goods. If a worker passing along a passage collides with a protruding corner of the rack post (P), the worker may be injured, thus causing an accident.

As a prior art related with the present invention, there is the Korean patent laid-open number 2012-0137977 (the laid-open date: December 24, 2012), which describes a rack structure for a warehouse and stacking having a prefabricated structure. DE 102010052108 and KR 101296162 disclose a rack post protection apparatus.

### DISCLOSURE OF THE INVENTION

Accordingly, it is an object of the present invention to provide a rack post protection apparatus wherein an attachment and detachment are easy, and an installation work may be simplified, and the front surface and both lateral surfaces of a rack post which are exposed to the outside can be protected.

It is another object of the present invention to provide a rack post protection apparatus wherein when the protection apparatus detects any collision, the position of such a collision can be transmitted to a manager.

The solutions provided by the present invention are not limited to the aforementioned solutions, and other solutions not mentioned herein will be obviously understood to a person having ordinary skill in the art.

To achieve the above objects, there is provided a rack post protection system comprising a rack post protection apparatus. The rack post protection apparatus includes a cover having a pipe-shaped body, wherein a cut-away part corresponding to a width of a rack post is formed in a longitudinal direction of the pipe-shaped body, an installation part of the cover being perforated to define an installation space part, a lattice frame reinforcing body, a pair of extension plates which protrude in parallel from both ends of the cut-away part in the direction of the rack post, a Velcro or belt type tying member configured to fix in an attaching and detaching manner the rack post protection apparatus and the rack post while covering an outer surface of the cover installed at the rack post, and a communication module which is embedded in the installation space part through the installation part and is operable by a battery and is equipped with a transmission module and a collision detection sensor. The rack post protection system further comprises a main server which is equipped with a storage module and a transmission and receiving module; and a manager's computer which is configured to receive a collision position from the main server, wherein if the collision detection sensor of the rack post protection apparatus installed at the rack post detects a collision, the collision position is transmitted to the transmission and receiving module of the main server through the transmission module and is stored in the storage module and then is transmitted to the manager's computer; characterised in that the lattice type reinforcing body of the rack post protection apparatus is formed integral at an inner wall of the cover; and the installation part of the rack post protection apparatus is provided at an upper end of the cover.

Moreover, the width of the cut-away part may be the same as or smaller than the width of the rack post, and the extension plates may contact close with both lateral sides of the rack post and are engaged.

In addition, a collision detection sensor operated by a battery may be embedded at the top of the cover, and if a collision is detected, the position of the collision may be transmitted to a main server via a wireless network, and the main server transmits a corresponding content to a manager's computer, so the manager can confirm the collision.

### ADVANTAGEOUS EFFECTS

According to the present invention, the attachment and detachment of the rack post protection apparatus is easy, and an installation time thereof can be saved, and a work convenience can be enhanced.

The rack post protection apparatus is able to provide a simplified structure and is made of a synthetic resin, for which a formability is good, and a manufacturing cost can be saved, and a product competitiveness can be enhanced.

Moreover, since a plurality of rack post protection apparatuses may be installed connected to each other for multiple layers, and the length thereof can be adjusted based on any change to the length of the rack post.

In addition, it does not need to use an additional protection member which may be installed at a front surface and both lateral surfaces of a rack post, and three surfaces of a rack post can be simultaneously protected through a simplified installation work.

Furthermore, any collision can be detected using a built-in collision detection sensor, and a collision position can be transmitted to a manager, thus quickly recognizing any damage to a protection apparatus.

### BRIEF DESCRIPTION OF THE DRAWINGS

The present invention will become better understood with reference to the accompanying drawings which are given only by way of illustration and thus are not limitative of the present invention, wherein;
Figure 1 is a schematic perspective view illustrating a rack post;
Figure 2 is a detailed perspective view illustrating a rack post protection apparatus according to the present invention;
Figure 3 is a view for describing an implementation of a rack post protection apparatus according to the present invention;
Figure 4 is a cross sectional view illustrating a state before the installation of a rack post protection apparatus according to the present invention;

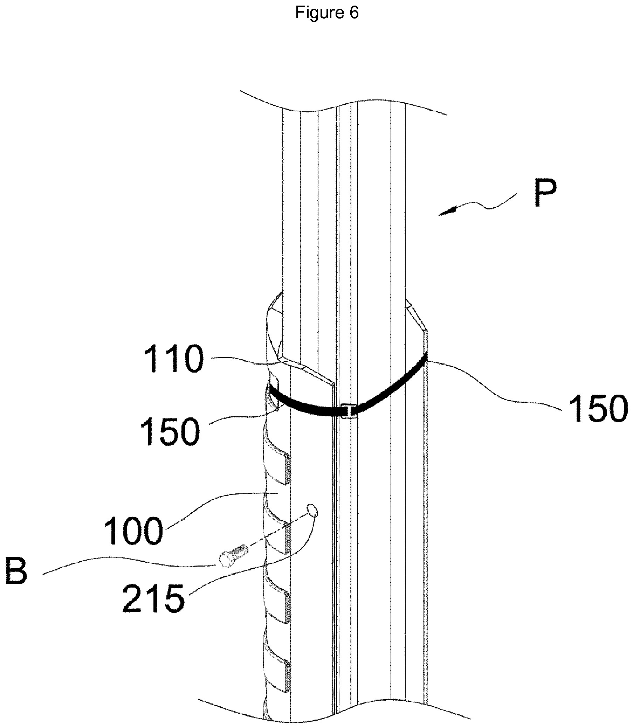

Figures 5 and 6 are views for describing an installation of a rack post protection apparatus according to the present invention;
Figure 7 is a view for describing a wireless communication of a rack post protection apparatus; and

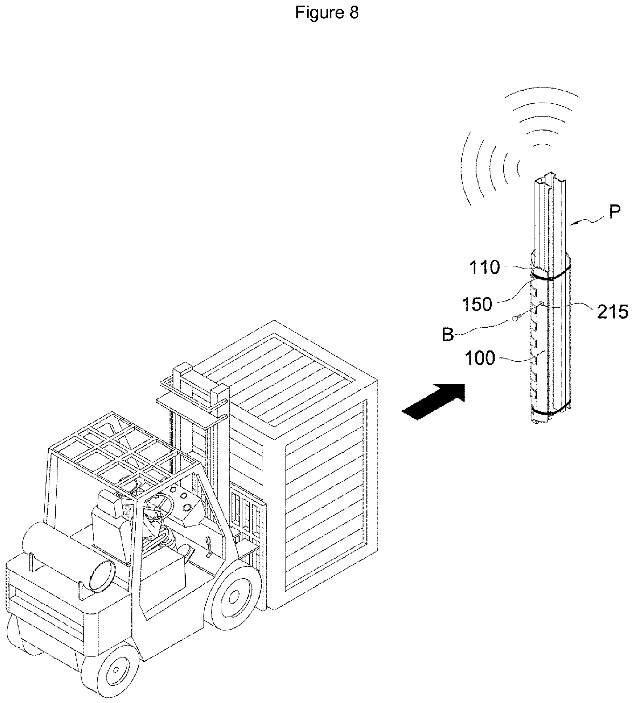

Figure 8 is a view for describing an implementation of a rack post protection apparatus according to an embodiment of the present invention.

### MODES FOR CARRYING OUT THE INVENTION

The rack post protection apparatus according to an embodiment of the present invention will be described with reference to the accompanying drawings.

The rack (or a rack structure) represents a structure which is manufactured and used to display sell products packed in a box or a pallet or store such products at a warehouse, a storage type shop, etc.

Moreover, the rack posts may be referred to a plurality of support members which are installed vertical at a rack structure and are disposed in parallel at regular intervals.

The rack post protection apparatus is referred to an apparatus which is able to prevent any damage and breakage of the rack posts disposed in the above-described structure and prevent any accident which might occur when a worker collides with a rack post.

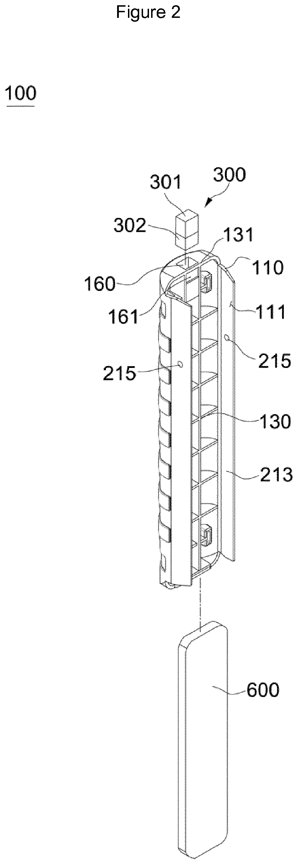

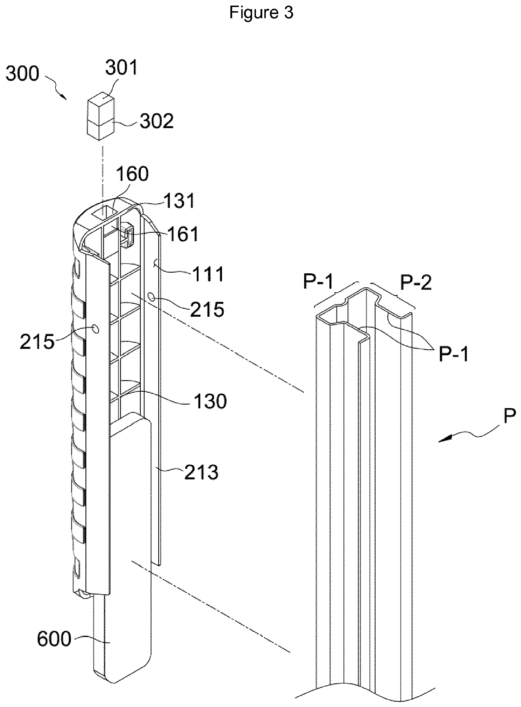

Figure 2 is a detailed perspective view illustrating a rack post protection apparatus according to the present invention, and Figure 3 is a view for describing an implementation of a rack post protection apparatus according to the present invention.

As illustrated in Figures 2 and 3, the rack post protection apparatus 100 according to the present invention may include a cover 110; and a honeycomb-shaped lattice frame reinforcing body 130 which is provided integral at the inner wall of the cover 110.

The cover 110 is a member made of a synthetic resin wherein a cut-away part corresponding to the width of the rack post is disposed in the longitudinal direction of a pipe-shaped body.

The cover 110 may have a predetermined set length and may include a pipe-shaped body, and a cut-away part 111 corresponding to the width of the rack post may be provided at the cover 110.

The width of the cut-away part 111 formed at the cover 110 may be same as the width of the rack post or may be smaller than the width thereof. When the cover 110 is installed at the rack post, the front surface (P-1 in Figure 3) and both lateral surfaces (P-2 in Figure 3) of the rack post may contact close with the cut-away part 111.

The cover 110 may be made of a synthetic resin material, in particular, a plastic material. As a specific example, a polycarbonate may be used.

This material may contribute to a stronger durability when an external impact is applied through the cover 110 and a good flexibility through the cut-away part 111 when attaching or detaching the cover 110, by which the width of the cut-away part can be contracted as it is widened or recovered.

The shape of the outer wall of the cover is not limited to the disclosed embodiment and may be reinforced or modified into various forms so as to secure a high strength and flexibility.

The rack post protection apparatus 100 may be installed at a rack post using the cut-away part 111.

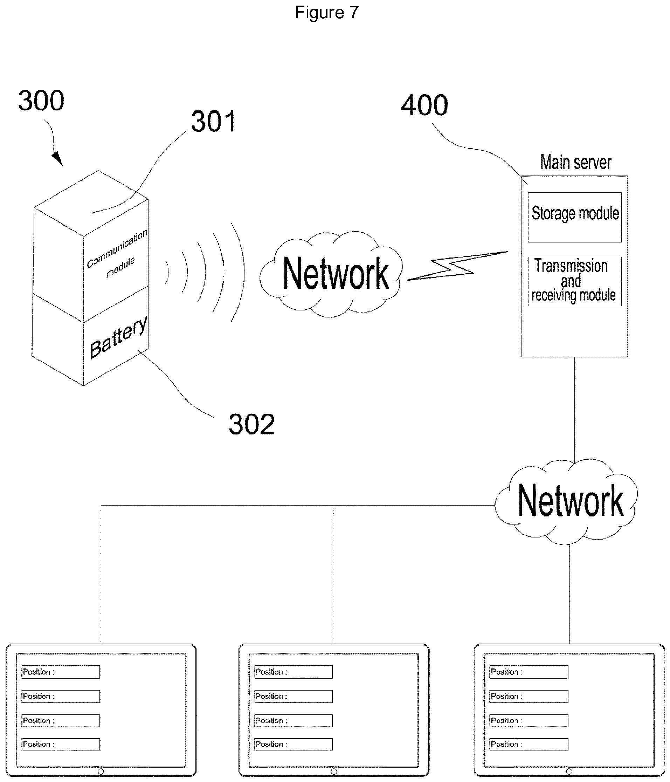

An installation part 160 may be perforated at the upper surface of the cover, so an installation space part 161 can be provided. A communication module 300 can be inserted and installed thereat. The communication module may be formed of a transmission module 301 operated by a battery (not illustrated) and a collision detection sensor 302. As illustrated in Figure 7, the communication module installed in the installation space part is able to transmit a corresponding collision position to a transmission and receiving module of a main server 400 in such a way to use the transmission module 301 if the collision detection sensor detects any collision, and the main server stores the collision position in a storing module and transmits to a manager's computer through the transmission and receiving module, after which a manager can recognize the collision position using the manager's computer 500, so the manager can quickly cope with such a collision. The communication between the communication module, the main server and the manager's computer 500 may be carried out through a wired or wireless network. Since the position confirmation can be estimated based on various communication protocol technologies, for example, a GPS, a RFID tag, a Wi-Fi, etc., the description thereof will be omitted.

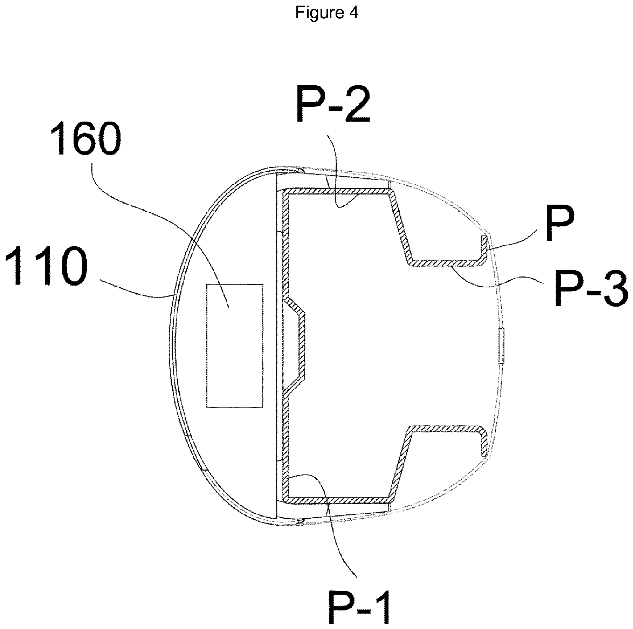

The installation procedure of the rack post protection apparatus according to the present invention will be described with reference to Figures 3 to 5.

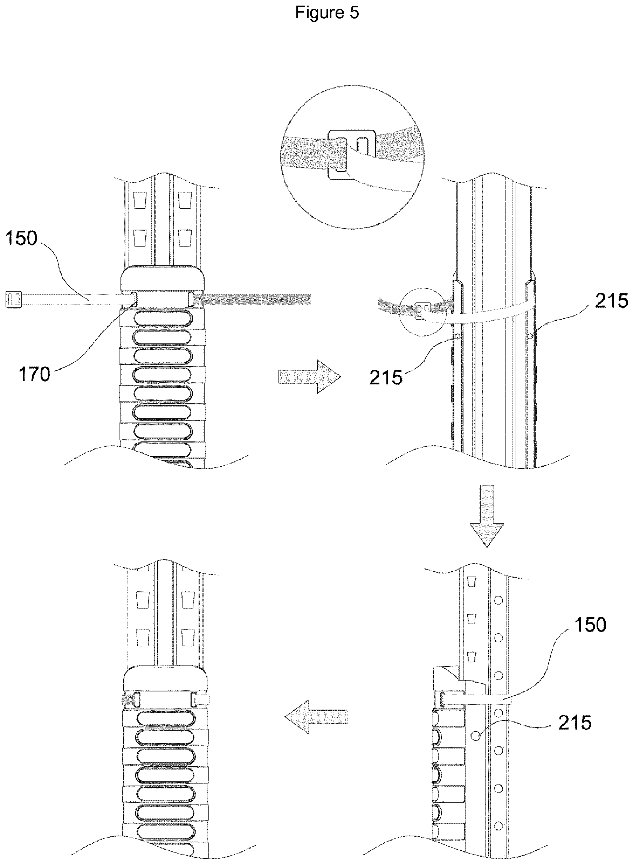

Figures 3 and 5 are disassembled perspective views illustrating a state before a rack post protection apparatus is installed according to the present invention. Referring to Figure 3, it shows only one rack post (P) in the whole rack structure for the sake of a simplified illustration. A rack post protection apparatus 100 is disposed at one side before it is installed at the rack post (P).

Like a typical rack post (P), a front surface thereof (P-1) protrudes forward, and a groove (P-3) formed contacting close with the cut-away part 111 of the cover 110 is provided at both lateral surfaces (P-2). The exterior of the rack post (P) before the rack post protection apparatus 100 is installed is like a configuration wherein three surfaces are exposed to the outside.

Since the cover 110 made of a synthetic resin material is flexible, the width of the cut-away part 111 can be widened or contracted within a predetermined range, so it can be installed at a rack post (P) in such a way to spread an extension plate 213 of the cut-away part 111 of the cover 110.

Figure 5 is a view for describing an implementation wherein a protection apparatus is fixed and engaged stable to a rack post using a string-shaped tying member 150 and a through hole 170. The through hole is perforated at the cover, and the string-shaped tying member is inserted through the through hole and is tied to the rack post, by which the protection apparatus can be fixedly engaged stable to the rack post. In this way, the installation time of the rack post protection apparatus 100 can be saved, and the installation work can be carried out in an easier way.

The tying member 150 is referred to a string (or a band) member which can be attached or detached like a Velcro type (or a belt type) member and may cover the outer surface of the cover 110 installed at the rack post (P), thus stably fixing the connection state between the rack post (P) and the rack post protection apparatus 100.

The length of the rack post protection apparatus 100 may be adjusted in response to any change to the length of the rack post (P). In this case, a plurality of the rack post protection apparatuses 100 may be connected, thus building a multi-layer structure.

Moreover, a pair of extension plates 213 may be provide at both ends of the cut-away part 111 of the cover 110 and protrude in parallel toward the rack post (P). An engaging hole 215 is formed at an upper end or a lower end of the extension plate. The cover may be fixed at the rack post using a bolt (B).

The rack post protection apparatus according to an embodiment of the present invention can be easily attached or detached, so installation time can be saved, and a work convenience can be enhanced.

Since the configuration of the rack post protection apparatus is simplified and is made of a synthetic resin material or a high flexibility sponge material, formability is good, and the manufacturing cost can be saved, which may result in an enhanced product competitiveness.

Moreover, since a plurality of the rack post protection apparatuses can be interconnected, thus building a multi-layer structure, the length thereof can be adjusted in response to any change to the length of the rack post.

In addition, the three surfaces of the rack post can be protected through a simple installation work without using an additional protection device which is installed at each of the front surface and both lateral surfaces of the rack post.

Also, a cushion pad 600 can be inserted between the front surface (P-1) of a rack post (P) and the cover 110 in order to absorb the external impact on the cover.

So far, the rack post protection apparatus according to the present invention has been described in detail.

## Claims

1. A rack post protection system comprising
a rack post protection apparatus (100), the rack post protection apparatus (100) having:
a cover (110) having a pipe-shaped body, wherein a cut-away part (111) corresponding to a width of a rack post is formed in a longitudinal direction of the pipe-shaped body;
an installation part (160) of the cover (110) being perforated to define an installation space part (161);
a lattice type reinforcing body (130);
a pair of extension plates (213) which protrude in parallel from both ends of the cut-away part (111) in the direction of the rack post;
a Velcro or belt type tying member (150) which is configured to cover an outer surface of the cover (110) installed at the rack post and is able to fix in an attaching or detaching manner the rack post protection apparatus (100) and the rack post; and
a communication module (300) which is embedded in the installation space part (161) through the installation part (161) and is operable by a battery and is equipped with a transmission module (301) and a collision detection sensor (302);
a main server (400) which is equipped with a storage module and a transmission and receiving module; and
a manager's computer which is configured to receive a collision position from the main server (400), wherein if the collision detection sensor (302) of the rack post protection apparatus (100) installed at the rack post detects a collision, the collision position is transmitted to the transmission and receiving module of the main server (400) through the transmission module and is stored in the storage module and then is transmitted to the manager's computer; **characterised in that**
the lattice type reinforcing body (130) of the rack post protection apparatus (100) is formed integral at an inner wall of the cover (110); and
the installation part (160) of the rack post protection apparatus (100) is provided at an upper end of the cover (110).

2. The system of claim 1, the apparatus (100) further comprising:
an engaging hole (215) formed at the extension plate (213), so the cover (110) can be fixed at the rack post using a bolt (B).

3. The system of claim 1, the apparatus (100) further comprising:
a through hole (170) perforated at the cover (110), wherein the tying member (150) is inserted through the through hole (170) and is tied to the rack post, by which the rack post protection apparatus (100) can be stably fixed at the rack post.

4. The system of claim 1, the apparatus (100) further comprising:
a cushion pad (600) inserted between a front surface of a rack post and the cover (110), so the external impact on the cover (110) can be absorbed.

## Patentansprüche

1. Regalpfosten-Schutzsystem, das Folgendes umfasst
eine Regalpfosten-Schutzvorrichtung (100), wobei die Regalpfosten-Schutzvorrichtung (100) aufweist:
eine Abdeckung (110) mit einem rohrförmigen Körper, wobei ein weggeschnittener Teil (111) entsprechend einer Breite eines Regalpfostens in einer Längsrichtung des rohrförmigen Körpers ausgebildet ist;
ein Installationsteil (160) der Abdeckung (110), das perforiert ist, um ein Installationsraumteil (161) zu definieren;
ein gitterartiges Verstärkungsteil (130);
ein Paar Erweiterungsplatten (213), die parallel von beiden Enden des weggeschnittenen Teils (111) in Richtung des Regalpfostens hervorragen;
ein Velcro- oder Gurttyp-Kopplungselement (150), das dazu ausgestaltet ist, eine äußere Oberfläche der Abdeckung (110) abzudecken, die an dem Regalpfosten installiert ist, und das in einer anbringenden oder abtrennenden Weise die Regalpfosten-Schutzvorrichtung (100) mit dem Regalpfosten befestigen kann; und
ein Kommunikationsmodul (300), das in das Installationsraumteil (161) durch das Installationsteil (161) eingebettet ist und mit einer Batterie betreibbar ist und mit einem Sendemodul (301) und einem Kollisionserfassungssensor (302) ausgestattet ist;
ein Hauptserver (400), der mit einem Speichermodul und einem Sende- und Empfangsmodul ausgestattet ist; und
einen Verwaltercomputer, der dazu ausgestaltet ist, eine Kollisionsposition von dem Hauptserver (400) zu empfangen, wobei, wenn der Kollisionserfassungssensor (302) der am Regalpfosten installierten Regalpfosten-Schutzvorrichtung (100) eine Kollision erfasst, die Kollisionsposition an das Sende- und Empfangsmodul des Hauptservers (400) durch das Sendemodul gesendet wird und in dem Speichermodul gespeichert wird und dann an den Verwaltercomputer gesendet wird;
**dadurch gekennzeichnet, dass**
der gitterartige Verstärkungskörper (130) der Regalpfosten-Schutzvorrichtung (100) an einer Innenwand der Abdeckung (110) fest eingebaut ausgebildet ist; und
das Installationsteil (160) der Regalpfosten-Schutzvorrichtung (100) an einem oberen Ende der Abdeckung (110) vorgesehen ist.

2. System nach Anspruch 1, wobei die Vorrichtung (100) ferner umfasst:
ein Eingriffsloch (215), das in der Erweiterungsplatte (213) ausgebildet ist, so dass die Abdeckung (110) mit einer Schraube (B) an dem Regalpfosten befestigt werden kann.

3. System nach Anspruch 1, wobei die Vorrichtung (100) ferner umfasst:
ein Durchgangsloch (170), das in der Abdeckung (110) perforiert ist, wobei das Kopplungselement (150) durch das Durchgangsloch (170) hindurch eingesetzt wird und mit dem Regalpfosten verbunden wird, wodurch die Regalpfosten-Schutzvorrichtung (100) standsicher an dem Regalpfosten befestigt werden kann.

4. System nach Anspruch 1, wobei die Vorrichtung (100) ferner umfasst:
eine Polsterauflage (600), die zwischen einer Vorderfläche eines Regalpfostens und der Abdeckung (110) eingesetzt wird, so dass die äußere Einwirkung auf die Abdeckung (110) absorbiert werden kann.

## Revendications

1. Système de protection montant de baie, comprenant :
un appareil (100) de protection montant de baie, l'appareil (100) de protection montant de baie comportant :
un couvercle (110) comportant un corps en forme de tuyau, une partie découpée (111) correspondant à une largeur d'un montant de baie dans une direction longitudinale du corps en forme de tuyau ;
une partie d'installation (160) du couvercle (110) étant perforée pour définir une partie d'espace d'installation (161) ;
un corps de renfort de type treillis (130) ;
une paire de plaques d'extension (213) qui font saillie en parallèle à partir des deux extrémités de la partie découpée (111) dans la direction du montant de baie ; un élément d'attache de type Velcro ou courroie (150) qui est conçu pour couvrir une surface extérieure du couvercle (110) installé au niveau du montant de baie et qui est à même de fixer selon un mode d'attachement ou de détachement l'appareil (100) de protection montant de baie et le montant de baie ; et
un module de communication (300) qui est incorporé dans la partie d'espace d'installation (161) à travers la partie d'installation (161) et pouvant être activé par une batterie et qui est équipé d'un module d'émission (301) et d'un capteur de détection de collision (302) ;
un serveur principal (400) qui est équipé d'un module de mémorisation et d'un module d'émission et de réception ; et
un ordinateur de gestionnaire qui est configuré pour recevoir une position de collision depuis le serveur principal (400), dans lequel si le capteur de détection de collision (302) de l'appareil (100) de protection montant de baie installé au niveau du montant de baie détecte une collision, la position de collision est transmise au module d'émission et de réception du serveur principal (400) à travers le module d'émission et mémorisée dans le module de mémorisation puis transmise à l'ordinateur du gestionnaire ;
**caractérisé en ce que**
le corps de renfort de type treillis (130) de l'appareil (100) de protection montant de baie est formé intégralement au niveau d'une paroi intérieure du couvercle (110) ; et
la partie d'installation (160) de l'appareil (100) de protection montant de baie se trouve au niveau d'une extrémité supérieure du couvercle (110).

2. Système selon la revendication 1, l'appareil (100) comprenant en outre :
un trou (215) de mise en contact au niveau de la plaque d'extension (213), de sorte que le couvercle (110) peut être fixé au montant de baie à l'aide d'un boulon (B).

3. Système selon la revendication 1, l'appareil (100) comprenant en outre :
un trou traversant (170) perforé au niveau du couvercle (110), l'élément d'attache (150) étant introduit à travers le trou traversant (170) et étant attaché au montant de baie, moyennant quoi l'appareil (100) de protection montant de baie peut être fixé de manière stable au niveau du montant de baie.

4. Système selon la revendication 1, l'appareil (100) comprenant en outre :
un tampon d'amortissement (600) introduit entre une surface avant d'un montant de baie et le couvercle (110), de façon à pouvoir absorber l'impact externe sur le couvercle (110).
